# FASCICULE DE BREVET EUROPEEN

(11) **EP 2 794 097 B1**
(45) Date de publication et mention de la délivrance du brevet: **08.02.2017**
(21) Numéro de dépôt: 12821266.9
(22) Date de dépôt: 18.12.2012
(51) Int. Cl.: B01J 23/72, C07F 7/16

(54) **PROCEDE DE SYNTHESE DIRECTE D'ALKYLHALOGENOSILANES**
VERFAHREN ZUR DIREKTEN SYNTHESE VON ALKYLHALOGENOSILANEN
METHOD FOR THE DIRECT SYNTHESIS OF ALKYLHALOGENOSILANES

(30) Priorité: 19.12.2011 FR 1103922
(43) Date de publication de la demande: 29.10.2014
(73) Titulaire: Bluestar Silicones France, 69003 Lyon (FR)
(72) Inventeur: ROSIER, Cécile, F-69440 Saint Laurent d'Agny (FR)
(74) Mandataire: Mekki, Boualem
(86) Numéro de dépôt international: PCT/FR2012/000526
(87) Numéro de publication internationale: WO 2013/093234

(56) Documents cités:
- FR-A1- 2 848 124
- FR-A1- 2 848 211
- US-A- 5 059 343
- US-B1- 6 258 970

## Description

La présente invention se rapporte à des améliorations concernant le procédé industriel mis en oeuvre pour la synthèse directe d'alkylhalogénosilanes.

Le procédé industriel de fabrication d'alkylhalogénosilanes tel que, par exemple, le diméthyldichlorosilane dénommé par la suite DMDCS est un procédé bien connu qui est décrit notamment dans le brevet des Etats-Unis d'Amérique US-A-2 380 995, ainsi que dans l'ouvrage de Walter NOLL, Chemistry and Technology of Silicones, 1968 , édition Académie Press Inc., LONDON, pages 26-41.

Selon ce procédé dit de "synthèse directe" ou "synthèse de Rochow", on fabrique directement les alkylhalogénosilanes, par exemple le DMDCS, par réaction du chlorure de méthyle sur une masse de contact solide formée de silicium et d'un catalyseur comprenant du cuivre, suivant la réaction :

2CH₃Cl + Si -> (CH₃)₂SiCl₂.

En réalité, il se forme au cours de la synthèse directe d'autres co-produits tels que ceux mentionnés ci-après : d'autres alkylhalogénosilanes comme le méthyltrichlorosilane CH₃SiCl₃ dénommé par la suite MTCS et le triméthylchlorosilane (CH₃)₃SiCl dénommé par la suite TMCS; des alkylhydrogénosilanes halogénés comme par exemple le méthylhydrogénodichlorosilane (CH₃)HSiCl₂ dénommé par la suite MHDCS ; et des produits lourds qui sont des polysilanes, et en particulier des disilanes comme par exemple le triméthyltrichlorodisilane (CH₃)₃Si₂Cl₃, le diméthyltétrachlorodisilane (CH₃)₂Si₂Cl₄ et le tétraméthyldichlorodisilane (CH₃)₄Si₂Cl₂.

Parmi tous les produits obtenus par synthèse directe, le dialkyldihalogénosilane et, par exemple le DMDCS, est le principal produit, c'est à dire le produit obtenu en quantité majoritaire. Ce produit est très recherché car, après hydrolyse et polymérisation, il permet d'obtenir des huiles et des gommes qui sont des produits de base dans le domaine des silicones:

Il est connu d'utiliser le cuivre, pris sous forme de cuivre métallique ou sous forme de composés chimiques à base de cuivre, comme catalyseur de la réaction de synthèse directe. Il est également connu, pour améliorer les performances de la synthèse directe, de rajouter au cuivre un ensemble promoteur comportant un ou plusieurs additif(s) promoteur(s) ; ces additifs peuvent être : le zinc ou un halogénure de zinc (brevet US-A-2 464 033), l'aluminium (brevets US-A-2 403 370 et 2 427 605), l'étain, le manganèse, le nickel et l'argent (brevet britannique GB-A-1 207 466), le cobalt (brevet britannique GB-A-907 161), le chlorure de potassium , l'arsenic ou un composé de l'arsenic (brevet US-A-4 762 940).

Le procédé de synthèse directe peut être mis en oeuvre dans différents types de réacteurs industriels tels que, par exemple, un réacteur du type à lit agité comme celui décrit dans le brevet des Etats-Unis d'Amérique US-A-2 449 821 ou un réacteur du type à lit fluidisé comme celui décrit dans le brevet des Etats-Unis d'Amérique US-A-2 389 931. La mise en oeuvre dans un réacteur du type à lit fluidisé est la plus largement répandue comme décrit dans les brevets FR 2848124, FR 2848211, US 6258970 et US 5059343. Dans ce procédé, le réacteur est alimenté en continu en halogénure d'alkyle, et par exemple en chlorure de méthyle, et de façon continue ou semi continue en silicium pour remplacer celui qui a été consommé pour la production des alkylhalogénosilanes. Il est connu qu'avec l'avancement de la réaction , la sélectivité en produit recherché (le dialkyldihalogénosilane et par exemple le DMDCS) et l'activité de la réaction (qui peut être mesurée par exemple en grammes d'alkylhalogénosilanes formés par kg de silicium et par heure) diminuent au fur et à mesure de l'accumulation dans la masse réactionnelle des impuretés provenant du silicium de départ qui ne réagissent pas avec le chlorure de méthyle. Cette accumulation d'impuretés, et notamment l'aluminium, entraîne une dégradation de la sélectivité et de l'activité de la réaction et favorise les dépôts de carbone (ou coke) dans le réacteur. Les recherches continuent dans ce domaine car les conditions de mise en oeuvre industrielles du procédé de synthèse directe donnent naissance, de manière connue en soi [cf. Journal of Catalysis 161, 861-866 (1996)], à des réactions parasites de cracking de l'halogénure d'alkyle de départ, réactions parasites qui conduisent à la formation de coke et d'hydrocarbures. Cette formation de coke est à l'origine, notamment, de l'encrassement du réacteur de synthèse directe à l'intérieur duquel se fixent des dépôts de coke. Ces dépôts de carbone sont très durs et difficiles à nettoyer car ils peuvent présenter une épaisseur de plusieurs dizaines de centimètres. Cet encrassement indésirable oblige à réaliser des opérations périodiques de nettoyage, ce qui diminue d'autant la capacité de production de l'installation. De plus, le dépôt de carbone qui se fait également à la surface des grains de silicium est fortement soupçonné d'être responsable en partie de la dégradation de l'activité et de la sélectivité de la réaction.

Lorsque la sélectivité et l'activité de la réaction ne sont plus économiquement acceptables, l'opération est arrêtée. La masse réactionnelle contenue dans le réacteur formée de silicium, catalyseurs et impuretés (également appelée masse usée) est vidangée, le réacteur est nettoyé et une autre opération industrielle est démarrée avec du silicium neuf. L'étape de nettoyage est d'autant plus aisée que les dépôts de carbone dans le réacteur sont peu nombreux.

La demande de brevet WO 2011/046663 décrit un procédé de fabrication d'alkylhalogenosilanes qui permet d'augmenter la durée pendant laquelle la sélectivité en dialkyldiahalosilane et le taux de conversion du silicium sont économiquement viables ainsi que la diminution des dépôts de carbone. Dans cette demande, l'utilisation d'un silicium à très faible teneur en aluminium (compris entre 0,001 et 0,10 % poids) est décrite. Cette demande est silencieuse sur les problèmes et les solutions liées au besoin de maintenir une activité suffisante de la masse réactionnelle pour produire industriellement les alkylhalogénosilanes.

Or, il est connu que la teneur en aluminium dans le silicium introduit dans le réacteur a un effet important sur le cracking du chlorure de méthyle. Plus le taux d'aluminium est élevé et plus on craque du chlorure de méthyle ce qui favorise les dépôts de carbone dans le réacteur et à la surface des grains de silicium (LD Gasper-Calvin et al., Journal of Catalysis, 128 (1991) p.468). Mais il est également connu que le taux d'aluminium présent dans le silicium introduit dans le réacteur a un effet important sur l'activité de la réaction. Ainsi l'utilisation d'un silicium ayant une très faible concentration en aluminium conduit à une baisse d'activité de la masse réactionnelle (« The effect of low aluminium silicon on the direct process », JM Bablin et al. Silicon for the Chemical Industry VI (2002),p.323).

Par conséquent, il y a un intérêt à améliorer le procédé de préparation d'alkylhalogénosilanes de façon à maintenir le plus longtemps possible un bon niveau de sélectivité en dialkyldihalogénosilane et une bonne activité de la réaction tout en diminuant les dépôts de carbone dans le réacteur et à la surface des grains de silicium.

Un des objectifs de cette demande est de fournir un procédé de préparation d'alkylhalogénosilanes alliant :
a) une bonne activité de la réaction
b) une bonne sélectivité en dialkyldihalogénosilane et
c) une bonne durée de vie de la masse catalytique.

La présente invention propose en conséquence un procédé de préparation d'alkylhalogénosilanes par réaction d'un halogénure d'alkyle, de préférence CH₃Cl, avec une masse solide, dite masse de contact, formée de silicium en poudre et d'un système catalytique comprenant au moins un catalyseur à base de cuivre et des additifs promoteurs β1 et β2, dans un réacteur à lit fluidisé, ledit procédé étant caractérisé en ce que :
a) on introduit un premier silicium Si1 ayant une teneur en aluminium de 0,10 à 0,18% poids, une teneur en calcium inférieure à 0,2 % poids et une teneur en phosphore inférieure à 50 ppm poids, puis
b) on introduit un deuxième silicium Si2, seul ou éventuellement en mélange avec Si1, ayant une teneur en aluminium de 0,10 à 0,15% poids, une teneur en calcium inférieure à 0,2% poids et une teneur en phosphore entre 50 et 250 ppm poids.
Il est entendu que le silicium Si2 est différent du silicium Si1. Ils se différencient toujours par au moins leur teneur en phosphore.

De préférence le premier silicium Si1 a une teneur en phosphore inférieure à 40 ppm poids. De façon encore plus avantageuse, le premier silicium Si1 a une teneur en phosphore inférieure à 30 ppm poids.

Selon un autre mode de réalisation le procédé de préparation d'alkylhalogénosilanes par réaction d'un halogénure d'alkyle, de préférence CH₃Cl, avec une masse solide, dite masse de contact, formée de silicium en poudre et d'un système catalytique comprenant au moins un catalyseur à base de cuivre et des additifs promoteurs β1 et β2, dans un réacteur à lit fluidisé, est mis en oeuvre de la manière suivante :
a) on introduit un premier silicium Si1 ayant une teneur en aluminium de 0,12 à 0,18% poids, une teneur en calcium inférieure à 0,2 % poids et une teneur en phosphore inférieure à 50 ppm poids, puis
b) on introduit un deuxième silicium Si2, seul ou éventuellement en mélange avec Si1, ayant une teneur en aluminium de 0,10 à 0,15% poids, une teneur en calcium inférieure à 0,2% poids et une teneur en phosphore entre 50 et 250 ppm poids,
avec la condition que la teneur en aluminium du silicium Si2 est inférieure à celle du silicium Si1.

En opérant de la sorte, il est possible de diminuer la quantité moyenne d'aluminium mise en oeuvre dans le procédé et ainsi limiter les inconvénients liés à l'accumulation d'aluminium décrits précédemment : la baisse de l'activité et de la sélectivité de la réaction et la formation des dépôts de carbone.

Il est du mérite des inventeurs, d'avoir mis en évidence que pour pouvoir satisfaire en même temps aux différentes contraintes techniques et améliorer la rentabilité du procédé de fabrication d'alkylhalogenosilanes, c'est-à-dire maintenir pendant le plus longtemps possible une bonne sélectivité en dialkyldihalogénosilane et une bonne activité de la réaction tout en minimisant les dépôts de carbone il est nécessaire de combiner l'utilisation de deux qualités de silicium Si1 et Si2 bien définies dans un ordre particulier. Ce nouveau procédé présente l'avantage d'espacer les arrêts techniques du procédé connu de l'art antérieur, où la masse contenue dans le réacteur est vidangée et le réacteur nettoyé. Cette amélioration permet de prolonger la durée des opérations industrielles et de diminuer la fréquence et la durée des arrêts du réacteur pendant lesquels il est vidangé, nettoyé puis rempli de silicium pour démarrer une nouvelle opération industrielle. La masse usée vidangée est détruite. Par conséquent, plus la durée de l'opération industrielle est élevée plus le rendement global en silicium est élevé et le ratio tonnes de silicium détruit par tonne de silicium consommé diminue.

Selon un mode de réalisation préféré, l'étape (a) est opérée de la manière suivante : le réacteur à lit fluidisé est rempli initialement avec du silicium Si1 tel que décrit ci-dessus, et le réacteur est alimenté de façon continue en mettant en oeuvre:
- l'étape (a) puis l'étape (b) du procédé selon l'invention ou
- l'étape (b) du procédé selon l'invention.
L'alimentation de Si2 dans le réacteur qui est l'étape (b) du procédé selon l'invention peut commencer dès que la production alkylhalogénosilanes démarre pour remplacer le silicium consommé par la réaction ou après une période d'alimentation avec du Si1. Ainsi, l'alimentation de Si2 dans le réacteur peut commencer lorsque la masse réactionnelle a été renouvelée au moins une fois, c'est-à-dire que l'équivalent de la masse initiale de silicium contenue dans le réacteur a été consommée. La durée des opérations industrielles est évaluée par le nombre de fois où l'équivalent de la masse initiale de silicium contenue dans le réacteur à lit fluidisé a été consommée (appelée nombre de renouvellements du réacteur). Selon un autre mode de réalisation, l'alimentation en Si2 commence lorsque le nombre de renouvellement de réacteur est supérieur à 1,5.

Pour des raisons économiques, le silicium généralement utilisé pour la préparation d'alkylhalogénosilanes est le silicium métallurgique, produit par carboréduction de la silice dans un four électrique, puis affiné pour régler le taux de ses principales impuretés telles que l'aluminium et le calcium et ainsi satisfaire les spécifications requises par le marché. Il contient également des impuretés secondaires apportées par les matières premières que le procédé de production et d'affinage ne permet pas toujours d'éliminer. Ces impuretés, ainsi que leur taux de présence dans le silicium, en général compris entre 10 et 500 ppm massique dépendent très fortement de l'origine des matières premières utilisées. Les plus habituelles de ces impuretés secondaires sont le phosphore, le soufre, le bore , le carbone ou des métaux tels que le titane, le cuivre, le magnésium, le manganèse, le vanadium, le nickel, le zirconium, etc.

Pour obtenir la teneur en phosphore souhaitée dans le silicium métallurgique, différentes méthodes peuvent être utilisées. Par exemple, le brevet EP 0272860 décrit une méthode pour contrôler la teneur en phosphore dans le silicium métallurgique en introduisant du phosphore dans le four via les matières premières comme le charbon et la houille utilisés pour la carboréduction ou via des composés phosphorés tels que Cu3P, FeP, CaP, etc. Le brevet EP 0273635 décrit une méthode de fabrication de silicium pour garantir une teneur en phosphore de 25 à 2500 ppm massiques par ajout d'un composé non volatile du phosphore après la coulée du silicium, avant ou après l'affinage. Le brevet EP 1211223 décrit l'ajout au four électrique d'un alliage SiP élaboré préalablement contenant plus de 75% de silicium.

L'effet des teneurs en impuretés du silicium (Al, Ca, P, Fe, etc.) sur le procédé de préparation d'alkylhalogénosilanes a été largement étudié mais les résultats de ces études sont souvent contradictoires car il faut également tenir compte des interactions entre les différentes impuretés, des catalyseurs et promoteurs utilisés ainsi que de la granulométrie du silicium employé.

La teneur en aluminium, calcium et phosphore des différentes qualités de silicium employées peuvent être mesurées par différentes techniques analytiques comme par exemple, la fluorescence X, la spectrométrie d'émission atomique à plasma inductif (ICP-AES) ou la spectrométrie d'absorption atomique.

De façon préférentielle, le deuxième silicium Si2, introduit seul ou éventuellement en mélange avec Si1, a une teneur en aluminium de 0,11 à 0,15% poids, une teneur en calcium inférieure à 0,2% poids et une teneur en phosphore entre 50 et 200 ppm poids. Encore plus préférentiellement, le deuxième silicium Si2, introduit seul ou éventuellement en mélange avec Si1, a une teneur en aluminium de 0,12 à 0,15% poids, une teneur en calcium inférieure à 0,2% poids et une teneur en phosphore entre 50 et 150 ppm poids. L'utilisation d'un silicium Si2 avec une teneur en phosphore supérieure à 50 ppm poids permet de s'affranchir de l'ajout de phosphore sous forme d'additif promoteur évitant ainsi les problèmes habituellement rencontrés pour l'introduction et l'homogénéisation du milieu réactionnel quand on rajoute une aussi faible quantité d'additif solide pour obtenir une concentration de 50 à 250 ppm dans le lit fluidisé. Bien sûr, le procédé selon l'invention n'exclue pas l'addition de phosphore en tant qu'additif promoteur.

Il est important de maîtriser la granulométrie de la poudre de silicium utilisée dans le procédé. De préférence, la poudre de silicium Si1 et/ou Si2 introduit dans le réacteur a une distribution granulométrique telle que 10% en poids des particules ont un diamètre inférieur à 30 µm, 50% en poids des particules ont un diamètre inférieur à 200 µm et 90% en poids des particules ont un diamètre inférieur à 400 µm.

Plus préférentiellement, la poudre de silicium Si1 et/ou Si2 introduit dans le réacteur a une distribution granulométrique telle que 10% en poids des particules ont un diamètre inférieur à 20 µm, 50% en poids des particules ont un diamètre inférieur à 100 µm et 90% en poids des particules ont un diamètre inférieur à 300 µm.

Encore plus préférentiellement, la poudre de silicium Si1 et/ou Si2 introduit dans le réacteur a une distribution granulométrique telle que 10% en poids des particules ont un diamètre inférieur à 5 µm, 50% en poids des particules ont un diamètre inférieur à 60 µm et 90% en poids des particules ont un diamètre inférieur à 200 µm.

La granulométrie de le poudre de silicium peut être mesurée par différentes techniques connues comme par exemple le tamisage de la poudre de silicium suivi du pesage des différentes fractions obtenues ou par diffraction laser.

Concernant le système catalytique, le catalyseur à base de cuivre peut être du cuivre métallique, un alliage à base de cuivre ou un composé à base de cuivre et/ou leurs mélanges. On peut utiliser à titre de composé du cuivre, notamment : un halogénure de cuivre comme par exemple le chlorure cuivreux ou le chlorure cuivrique ; un carboxylate de cuivre comme par exemple le formiate cuivreux, le formiate cuivrique, l'acétate cuivreux ou l'acétate cuivrique ; un oxyde de cuivre comme par exemple Cu₂O ou CuO et/ou leurs mélanges. Le chlorure cuivreux (CuCI) est un catalyseur avantageux qui peut éventuellement se présenter sous forme de billes comme décrit dans le brevet EP 1902060. Avantageusement, le catalyseur à base de cuivre est utilisé à une teneur pondérale de 1 à 10 % par rapport au poids total de silicium engagé

Selon un mode de réalisation particulier, le système catalytique contient en outre un additif promoteur β1 à base de zinc métallique et/ou d'un composé du zinc et un additif promoteur β2 à base d'étain et/ou d'un composé de l'étain.

De façon préférentielle, l'additif promoteur β1 utilisé est le zinc métallique et/ou le chlorure de zinc. L'additif promoteur β1 est présent à une teneur pondérale située dans l'intervalle allant de 0,01 à 2 %, de préférence allant de 0,01 à 0,5 %, (calculée en zinc métal par rapport au poids de silicium engagé). Jusqu'à 90 % en poids du zinc, de préférence jusqu'à 50 % en poids du zinc peut être remplacé par un autre métal qui catalyse la chloruration du cuivre et/ou qui forme un eutectique ou une phase à bas point de fusion avec les sels de cuivre et/ou les sels alcalins. Comme métal pouvant convenir on peut citer le cadmium, l'aluminium, le manganèse, le nickel et l'argent.

La teneur pondérale en étain et/ou en composé de l'étain (additif promoteur β2 dont la teneur est calculée en poids d'étain métal) se situe dans l'intervalle allant de 10 à 500 ppm et, de préférence, allant de 30 à 300 ppm par rapport à la masse de silicium engagée. Il est nécessaire d'avoir au moins 10 ppm d'étain métal. En outre une teneur pondérale supérieure à 500 ppm aurait un effet néfaste sur la réaction et notamment sur la sélectivité. Comme composé à base d'étain, on utilise par exemple le chlorure d'étain. L'additif promoteur β2 qui est utilisé de préférence est l'étain métal ; avantageusement cet étain métallique peut être ajouté sous forme de bronze.

Eventuellement d'autres additifs promoteurs peuvent être rajoutés tels que le Cs, le K et le Rb. On peut utiliser les halogénures, et par exemple le chlorure, les carboxylates et par exemple le formiate ou l'acétate. Le chlorure de césium, le chlorure de potassium, le chlorure de rubidium et/ou un mélange de ces composés sont de préférence utilisés. Le phosphore peut être également utilisé comme additif promoteur. Sa teneur pondérale (calculée en poids de phosphore élémentaire par rapport à la masse de silicium engagée) se situe dans l'intervalle allant de 50 à 1000 ppm et, de préférence, allant de 70 à 500 ppm et, plus préférentiellement encore, allant de 80 à 300 ppm ; au dessous de 50 ppm l'action du phosphore n'est pas vraiment décelable et au-dessus de 1000 ppm, le phosphore a un effet poison. Le phosphore utilisé comme additif promoteur peut être du phosphore élémentaire, tel que par exemple le phosphore rouge, le phosphore blanc et le phosphore noir, ou des composés à base de phosphore. Comme composé à base de phosphore, on peut utiliser les phosphures métalliques et par exemple le phosphure d'aluminium, le phosphure de calcium Ca₃P₂, le phosphure de cuivre Cu₃P, le phosphure de nickel NiP₂, le phosphure de d'étain SnP, les phosphures de fer FeP, Fe₂P et Fe₃P, les phosphures de zinc Zn₃P₂ et ZnP₂ et le phosphure de silicium.
Le catalyseur à base de cuivre et les différents additifs promoteurs sont introduits dans le réacteur sous forme de particules et le diamètre moyen d'au moins 50 % en poids des particules est avantageusement compris entre 1 et 200 µm.

La réaction de synthèse directe a lieu à une température se situant dans l'intervalle allant de 260 à 400°C et, de préférence, allant de 280 à 380 °C et encore plus préférentiellement allant de 285 à 330°C. Elle peut être conduite, en tout ou partie, sous une pression absolue d'halogénure d'alkyle égale à la pression atmosphérique (1 bar) ou supérieure à la pression atmosphérique ; quand on se situe dans ce dernier cas, on travaille généralement sous une pression absolue allant de 1,1 à 8 bars et ,de préférence, allant de 1,5 à 4 bars.

Pour la conduite de la réaction de synthèse directe, on peut réaliser avantageusement au préalable, comme cela est bien connu, une étape initiale d'activation de la masse de contact (formée la poudre de(s) silicium(s), le catalyseur et les additifs promoteurs). Un des moyens d'activation qui convient bien peut consister à porter ladite masse de contact à une certaine température qui peut être inférieure ou supérieure de quelques degrés à quelques dizaines de degrés à la température choisie pour la réaction de synthèse directe et située dans l'intervalle général allant de 260 à 400°C et, de préférence, allant de 280 à 380 °C et encore plus préférentiellement allant de 285 à 330°C.

En utilisant le procédé selon l'invention, on peut obtenir, lorsque la réaction est mise en oeuvre, en lit agité comme en lit fluidisé, à une température allant de 260°C à 400°C et, de préférence, allant de 280 à 380 °C, une sélectivité en dialkyldihalogénosilane élevée, une teneur pondérale en sous-produits lourds faible, tout en ayant une activité moyenne très satisfaisante. Ces bonnes performances peuvent être maintenues pendant longtemps et permettent d'avoir des opérations industrielles plus longues avec des phases d'arrêt du réacteur pour vidange et nettoyage plus espacées et plus brèves car l'encrassement du réacteur est réduit.

D'autres avantages et caractéristiques de la présente invention apparaîtront à la lecture des exemples suivants donnés à titre illustratif mais nullement limitatif.

### EXEMPLES

Des essais ont été réalisés au dans un réacteur pilote à lit agité au laboratoire pour tester différentes qualités de silicium avec des teneurs variables en aluminium, calcium et phosphore. Le mode opératoire de l'ensemble des essais réalisés au laboratoire est le suivant. Dans un réacteur vertical, cylindrique, de diamètre intérieur 85 mm et de hauteur 170 mm en acier inoxydable, muni d'un agitateur métallique et d'un distributeur de gaz en acier inoxydable fritté, on charge: 386 g de silicium, 14,7 g de CuCI, 0,095 g de Zn et 0,46 g de bronze contenant 10 % en poids d'étain. Le silicium est chargé sous forme d'une poudre dont au moins 50 % en poids des particules ont un diamètre inférieur à 160 µm. La température du réacteur est régulée à 295°C, la pression maintenue à 3,5 bar absolus et le débit de chlorure de méthyle est fixé à 125 g/h pendant tout l'essai, celui-ci ayant une durée moyenne de 20 heures. Les produits de la réaction sont collectés et analysés par chromatographie en phase gazeuse. La sélectivité est évaluée par le rapport pondéral moyen ou ratio MTCS/DMDCS et par le pourcentage de lourds formés par rapport à la quantité totale de silanes obtenus.
L'activité moyenne du système catalytique est évaluée en grammes de silanes produits par heure et par kg de silicium.
Le Tableau 1 suivant présente les résultats obtenus avec des qualités de silicium ayant des teneurs variables en aluminium et calcium.

**Tableau 1 : Silicium avec des teneurs variables en aluminium et calcium**

| Qualité Si | Al (% pds) | Ca (% pds) | Ratio MTCS/ DMDCS | Rendement lourds (% pds) | Activité Moyenne (g silanes/h/kg Si) |
|---|---|---|---|---|---|
| Si a | 0,178 | 0,084 | 0,04 | 6,2 | 227 |
| Si b | 0,142 | 0,08 | 0,04 | 8,1 | 180 |
| Si c | 0,073 | 0,038 | 0,06 | 4,9 | 106 |

| | | | | | |
|---|---|---|---|---|---|
| Pour ces trois qualités Si, la teneur en phosphore est comprise entre 20 et 25 ppm poids. | | | | | |

Les résultats présentés dans le Tableau 1 montrent que lorsqu'on diminue la teneur en aluminium dans le silicium, l'activité moyenne de la réaction diminue fortement. Ainsi si on diminue de 60% la teneur en aluminium, l'activité moyenne baisse de 55% et on dégrade la sélectivité de la réaction (le ratio MTCS/DMDCS augmente de 0.04 à 0.06 soit de 50%). Des baisses si importantes de l'activité et de la sélectivité de la réaction ne sont pas souhaitables pour un procédé industriel.

Le Tableau 2 suivant présente les résultats obtenus avec des qualités de silicium ayant des teneurs variables en aluminium et phosphore.

**Tableau 2: Silicium à basse teneur en aluminium et teneur en P élevée**

| Qualité Si | Al (% pds) | Ca (% pds) | P (ppm pds) | Ratio MTCS/ DMDCS | Rendement lourds (% pds) | Activité Moyenne (g silanes/h/kg Si) |
|---|---|---|---|---|---|---|
| Si d | 0,135 | 0,088 | 20 | 0,05 | 5.1 | 171 |
| Si e | 0,116 | 0,088 | 150 | 0,03 | 3.8 | 179 |

Les exemples du tableau 2 montrent que malgré une diminution de 15 % de la teneur en aluminium dans le silicium, la présence de 150 ppm de phosphore dans le silicium permet d'améliorer l'activité et la sélectivité de la réaction. L'activité de la réaction a augmenté de 5%, le ratio MTCS/DMDCS diminue de 40% et le rendement en lourds diminue de 25%. Cette qualité de silicium (correspondant au silicium e) présente donc l'avantage de contenir moins d'aluminium sans pour autant conduire à une dégradation de la sélectivité ou de l'activité de la réaction.

### Essais industriels

Des essais industriels ont été réalisés pour valider les résultats obtenus au laboratoire avec deux qualités de silicium différentes décrites dans le tableau 3 suivant.

**Tableau 3 : Qualités de silicium utilisées pour les essais industriels**

| Qualité silicium | Al (% pds) | Ca (% pds) | P (ppm pds) | Fe (%pds) |
|---|---|---|---|---|
| Si X | 0,16 | 0,08 | 25 | 0,4 |
| Si Y | 0,12 | 0,07 | 114 | 0,4 |

### Déroulement des opérations industrielles :

Le réacteur à lit fluidisé est chargé avec du silicium, du CuCl, et des promoteurs à base de zinc et d'étain. Le réacteur est alimenté avec du chlorure de méthyle en continu et maintenu à une température comprise entre 295 et 300°C. Le silicium est également alimenté en continu pour remplacer celui qui a été consommé par la réaction de formation des méthylchlorosilanes. Les catalyseurs et promoteurs sont également alimentés de façon continue ou semi continue pour maintenir leur concentration constante dans la masse réactionnelle. La durée des opérations industrielles est évaluée par le nombre de fois où la masse initiale de silicium a été complètement renouvelée dans le réacteur (appelée nombre de renouvellements du réacteur).

Nous avons réalisé trois types d'opérations industrielles.

OP1 (procédé comparatif) où tout au long de l'opération il n'y a que du Si X qui a été alimenté. Trois opérations ont été réalisées avec des résultats similaires. Les résultats sont présentés moyennés.

OP2 (procédé selon l'invention) où la charge initiale de silicium a été réalisée avec du Si X, puis le réacteur a été d'abord alimenté en Si X et lorsque le nombre de renouvellements de la masse du réacteur atteint 1,5, le réacteur a été alimenté avec du Si Y jusqu'à la fin de l'opération. Deux opérations ont été réalisées OP2a et OP2b.

OP3 (procédé comparatif) où tout au long de l'opération il n'y a que du Si Y qui a été alimenté.

La seule différence dans la conduite de ces opérations est la qualité de silicium qui a été utilisée pour alimenter en continu le réacteur à lit fluidisé. La granulométrie des deux qualités de silicium utilisées est comparable car ils ont été broyés et tamisés dans la même installation industrielle. La température, la pression et les concentrations en catalyseur (CuCI) et promoteurs (Zn et Sn) sont identiques. De façon générale, la granulométrie des siliciums X et Y utilisés est telle qu'au moins 50% en poids des particules de silicium ont un diamètre inférieur à 200 µm.

Le Tableau 4 suivant montre la durée de chacune de ces opérations industrielles et l'état d'encrassement du réacteur, dû aux dépôts de carbone, en fin d'opération.

**Tableau 4**

| Type Opération Industrielle | Durée OP (nombre renouvellements du réacteur) | Encrassement réacteur (dépôts de carbone) |
|---|---|---|
| OP1 (comparatif) | 24 | Réacteur encrassé |
| OP2a (invention) | 28 | Propre -pas d'encrassement |
| OP2b (invention) | 32 | Propre -pas d'encrassement |
| OP3 (comparatif) | 1 | Réacteur propre |

Ainsi, lors des opérations industrielles de type OP2 (procédé selon l'invention), on obtient un allongement de la durée de l'opération par rapport à une opération de type OP1 (procédé comparatif). Le nombre de renouvellements du réacteurs augmente de 24 à 28, soit 16% d'augmentation de la durée industrielle de l'opération pour OP2a et de 24 à 32 pour OP2b soit 33% d'augmentation de la durée industrielle de l'opération.

En revanche, lors de l'opération industrielle OP 3 (procédé comparatif), la masse réactionnelle présente une trop faible réactivité en début de réaction et la réaction n'a pas atteint la productivité nécessaire. L'opération a du être rapidement arrêtée au bout d'un seul renouvellement de réacteur ce qui n'est pas viable industriellement. La qualité Si Y ne peut pas être utilisée dès le début de l'opération industrielle.

De plus, les opérations industrielles de type OP2 (procédé selon l'invention) ont conduit à un réacteur propre, sans encrassement ce qui facilite les opérations de nettoyage et de mise à disposition des installations.

Le Tableau 5 suivant présente l'évolution de la sélectivité et de l'activité de la réaction en fonction de l'avancement de la réaction pour les opérations OP1 et OP2a.

**Tableau 5**

| Durée OP (nombre renouvellements du réacteur) | Ratio MTCS/ DMDCS | | Rendement lourds (% pds) | |
|---|---|---|---|---|
| | OP1 comparatif | OP2a invention | OP1 comparatif | OP2a invention |
| **2** | 0,082 | 0,055 | 4,9 | 2,9 |
| **4** | 0,075 | 0,057 | 5,8 | 5,9 |
| **8** | 0,077 | 0,069 | 6,0 | 4,6 |
| **12** | 0,085 | 0,076 | 6,6 | 5,6 |
| **16** | 0,115 | 0,073 | 7,8 | 5,8 |
| **20** | 0,121 | 0,079 | 6,2 | 7,1 |
| **24** | 0,158 | 0,075 | 6,7 | 5,5 |
| **28** | | 0,085 | | 7,1 |

Ainsi, on constate que pour l'opération OP2a (procédé selon l'invention) une bonne sélectivité (ratio MTCS/DMDCS ≤0,100 ) est maintenue pendant toute l'opération alors que pour l'opération industrielle OP1 (procédé comparatif), la sélectivité se dégrade de façon importante dès 16 renouvellements du réacteur (ratio MTCS/DMDCS >0,100).

Afin d'évaluer l'activité du réacteur, c'est-à-dire sa productivité horaire, le tableau 6 suivant présente en fonction de la durée de l'opération (toujours mesurée via le nombre de renouvellement de réacteur) l'évolution de l'activité. Cette activité a été initialement mesurée en grammes de méthylchlorosilanes produits par heure et par kg de silicium. La valeur 100 a été attribuée pour toutes les opérations à la valeur initiale (mesurée à deux renouvellements de réacteur) et c'est l'évolution en pourcentage par rapport à cette valeur initiale qui est présentée dans le tableau 6 suivant.

**Tableau 6**

| Durée OP (nombre renouvellements de réacteur) | Activité normalisée | | |
|---|---|---|---|
| | OP1 comparatif | OP2a invention | OP2b invention |
| **2** | 100 | 100 | 100 |
| **4** | +4% | +11% | +6% |
| **8** | +12% | 0 | +18% |
| **12** | +14% | +1% | +17% |
| **16** | +11% | -4% | +9% |
| **20** | +2% | +3% | +16% |
| **24** | -16% | -4% | +13% |
| **28** | | -12% | +11% |
| **32** | | | -6% |

Ces résultats montrent que lors des opérations OP2 (procédé selon l'invention), on réussit à maintenir le niveau d'activité initial pendant un plus grand nombre de renouvellements de réacteur, ce qui permet d'envisager des durées d'opération plus longues que pour le procédé OP1 (procédé comparatif) où après 24 renouvellements de réacteur l'activité a diminué de 16%.

Pour terminer, le Tableau 7 suivant montre l'accumulation d'aluminium dans la masse réactionnelle lors des opérations OP1 et OP2. Pour déterminer la teneur en aluminium dans la masse réactionnelle, on prélève un échantillon dans le réacteur qui est analysé par fluorescence X.

**Tableau 7**

| Durée OP (nombre renouvellements de réacteur) | Accumulation Al (ppm poids) | | |
|---|---|---|---|
| | OP1 comparatif | OP2a invention | OP2b invention |
| **2** | 1797 | 1720 | 1550 |
| **4** | 2680 | 2760 | 1920 |
| **8** | 4260 | 2900 | 2680 |
| **12** | 5500 | 3640 | 3200 |
| **16** | 6280 | 3960 | 3900 |
| **20** | 7630 | 4000 | 4400 |
| **24** | 8607 | 4910 | 5130 |
| **28** | | 5700 | 5730 |
| **32** | | | 7000 |

L' augmentation de la teneur en aluminium dans la masse réactionnelle se fait de façon plus lente lors des opérations industrielles OP2 (procédé selon l'invention). Après 24 renouvellements de réacteur les masses réactionnelles des opérations OP2a et OP2b présentent une teneur en aluminium beaucoup plus faible (environ -35%) que la masse réactionnelle de l'opération OP1 (procédé comparatif) . Ce résultat est à relier avec le taux d'encrassement final du réacteur observé pour chaque opération industrielle (Tableau 4).

Ces exemples illustrent bien l'objectif de cette invention. En utilisant le procédé de synthèse directe d'alkylhalogénosilanes selon l'invention, on obtient une sélectivité en dialkyldihalogénosilane élevée, une teneur pondérale en sous-produits lourds faible, tout en ayant une activité moyenne très satisfaisante. Ces bonnes performances peuvent être maintenues plus longtemps et permettent d'avoir des opérations industrielles plus longues avec des phases d'arrêt du réacteur pour vidange et nettoyage plus espacées et plus brèves car l'encrassement du réacteur est réduit et son nettoyage plus aisé.

## Revendications

1. Procédé de préparation d'alkylhalogénosilanes par réaction d'un halogénure d'alkyle, de préférence CH₃Cl, avec une masse solide, dite masse de contact, formée de silicium en poudre et d'un système catalytique comprenant au moins un catalyseur à base de cuivre et des additifs promoteurs β1 et β2, dans un réacteur à lit fluidisé, ledit procédé étant **caractérisé en ce que** :
a) on introduit un premier silicium Si1 ayant une teneur en aluminium de 0,10 à 0,18% poids, une teneur en calcium inférieure à 0,2 % poids et une teneur en phosphore inférieure à 50 ppm poids, puis
b) on introduit un deuxième silicium Si2, seul ou éventuellement en mélange avec Si1, ayant une teneur en aluminium de 0,10 à 0,15% poids, une teneur en calcium inférieure à 0,2% poids et une teneur en phosphore entre 50 et 250 ppm poids,
avec la condition que l'alimentation de Si2 dans le réacteur peut commencer lorsque la masse réactionnelle a été renouvelée au moins une fois.

2. Procédé de préparation d'alkylhalogénosilanes selon la revendication 1 par réaction d'un halogénure d'alkyle, de préférence CH₃Cl, avec une masse solide, dite masse de contact, formée de silicium en poudre et d'un système catalytique comprenant au moins un catalyseur à base de cuivre et des additifs promoteurs β1 et β2, dans un réacteur à lit fluidisé, ledit procédé étant **caractérisé en ce que** :
a) on introduit un premier silicium Si1 ayant une teneur en aluminium de 0,12 à 0,18% poids, une teneur en calcium inférieure à 0,2 % poids et une teneur en phosphore inférieure à 50 ppm poids, puis
b) on introduit un deuxième silicium Si2, seul ou éventuellement en mélange avec Si1, ayant une teneur en aluminium de 0,10 à 0,15% poids, une teneur en calcium inférieure à 0,2% poids et une teneur en phosphore entre 50 et 250 ppm poids,
avec la condition que la teneur en aluminium du silicium Si2 est inférieure à celle du silicium Si1.

3. Procédé selon la revendication 1 ou 2 dans lequel le deuxième silicium Si2, introduit seul ou éventuellement en mélange avec Si1, a une teneur en aluminium de 0,11 à 0,15% poids, une teneur en calcium inférieure à 0,2% poids et une teneur en phosphore entre 50 et 200 ppm poids.

4. Procédé selon l'une quelconque des revendications précédentes dans lequel le silicium en poudre Si1 et/ou Si2 introduit dans le réacteur a une distribution granulométrique telle que 10% en poids des particules ont un diamètre inférieur à 30 µm, 50% en poids des particules ont un diamètre inférieur à 200 µm et 90% en poids des particules ont un diamètre inférieur à 400 µm.

5. Procédé selon l'une quelconque des revendications précédentes dans lequel le silicium en poudre Si1 et/ou Si2 introduit dans le réacteur a une distribution granulométrique telle que 10% en poids des particules ont un diamètre inférieur à 20 µm, 50% en poids des particules ont un diamètre inférieur à 100 µm et 90% en poids des particules ont un diamètre inférieur à 300 µm.

6. Procédé selon l'une quelconque des revendications précédentes dans lequel le silicium en poudre Si1 et/ou Si2 introduit dans le réacteur a une distribution granulométrique telle que 10% en poids des particules ont un diamètre inférieur à 5 µm, 50% en poids des particules ont un diamètre inférieur à 60 µm et 90% en poids des particules ont un diamètre inférieur à 200 µm.

7. Procédé selon l'une quelconque des revendications précédentes où le catalyseur à base de cuivre est choisi parmi le groupe constitué par : le cuivre métallique, un alliage à base de cuivre ou un composé à base de cuivre et leurs mélanges.

8. Procédé selon l'une quelconque des revendications précédentes où le catalyseur à base de cuivre est choisi parmi le groupe constitué par : le cuivre métallique, un alliage de cuivre, un halogénure de cuivre, un carboxylate de cuivre, un oxyde de cuivre et leurs mélanges.

9. Procédé selon l'une quelconque des revendications précédentes, **caractérisé en ce que** le catalyseur à base de cuivre est utilisé à une teneur pondérale de 1 à 10 % par rapport au poids total de silicium engagé.

10. Procédé selon l'une quelconque des revendications précédentes, **caractérisé en ce que** l'additif β1 est le zinc métallique et/ou le chlorure de zinc.

11. Procédé selon l'une quelconque des revendications précédentes, **caractérisé en ce que** l'additif β2 est l'étain métal.

12. Procédé selon l'une quelconque des revendications 1 à 11, **caractérisé en ce que** la réaction de synthèse directe est conduite à une température se situant dans l'intervalle allant de 260°C à 400°C.

## Patentansprüche

1. Verfahren zur Herstellung von Alkylhalogensilanen durch Umsetzung eines Alkylhalogenids, vorzugsweise CH₃Cl, mit einer als Kontaktmasse bezeichneten festen Masse aus pulverförmigem Silicium und einem katalytischen System, umfassend mindestens einen Katalysator auf Basis von Kupfer und Promotoradditive β1 und β2, in einem Wirbelschichtreaktor, wobei das Verfahren **dadurch gekennzeichnet ist, dass**:
a) ein erstes Silicium Si1 mit einem Aluminiumgehalt von 0,10 bis 0,18 Gew.-%, einem Calciumgehalt von weniger als 0,2 Gew.-% und einem Phosphorgehalt von weniger als 50 Gew.-ppm eingetragen wird und dann
b) ein zweites Silicium Si2 mit einem Aluminiumgehalt von 0,10 bis 0,15 Gew.-%, einem Calciumgehalt von weniger als 0,2 Gew.-% und einem Phosphorgehalt zwischen 50 und 250 Gew.-ppm alleine oder gegebenenfalls in Abmischung mit Si1 eingetragen wird,
mit der Maßgabe, dass die Zufuhr von Si2 zum Reaktor beginnen kann, wenn die Reaktionsmasse mindestens einmal erneuert worden ist.

2. Verfahren zur Herstellung von Alkylhalogensilanen nach Anspruch 1 durch Umsetzung eines Alkylhalogenids, vorzugsweise CH₃Cl, mit einer als Kontaktmasse bezeichneten festen Masse aus pulverförmigem Silicium und einem katalytischen System, umfassend mindestens einen Katalysator auf Basis von Kupfer und Promotoradditive β1 und β2, in einem Wirbelschichtreaktor, wobei das Verfahren **dadurch gekennzeichnet ist, dass**:
a) ein erstes Silicium Si1 mit einem Aluminiumgehalt von 0,12 bis 0,18 Gew.-%, einem Calciumgehalt von weniger als 0,2 Gew.-% und einem Phosphorgehalt von weniger als 50 Gew.-ppm eingetragen wird und dann
b) ein zweites Silicium Si2 mit einem Aluminiumgehalt von 0,10 bis 0,15 Gew.-%, einem Calciumgehalt von weniger als 0,2 Gew.-% und einem Phosphorgehalt zwischen 50 und 250 Gew.-ppm alleine oder gegebenenfalls in Abmischung mit Si1 eingetragen wird,
mit der Maßgabe, dass der Aluminiumgehalt des Siliciums Si2 kleiner ist als derjenige des Siliciums Si1.

3. Verfahren nach Anspruch 1 oder 2, bei dem das alleine oder gegebenenfalls in Abmischung mit Si1 eingetragene zweite Silicium Si2 einen Aluminiumgehalt von 0,11 bis 0,15 Gew.-%, einen Calciumgehalt von weniger als 0,2 Gew.-% und einen Phosphorgehalt zwischen 50 und 200 Gew.-ppm aufweist.

4. Verfahren nach einem der vorhergehenden Ansprüche, bei dem das in den Reaktor eingetragene pulverförmige Silicium Si1 und/oder Si2 eine solche Teilchengrößenverteilung aufweist, dass 10 Gew.-% der Teilchen einen Durchmesser von weniger als 30 µm aufweisen, 50 Gew.-% der Teilchen einen Durchmesser von weniger als 200 µm aufweisen und 90 Gew.-% der Teilchen einen Durchmesser von weniger als 400 µm aufweisen.

5. Verfahren nach einem der vorhergehenden Ansprüche, bei dem das in den Reaktor eingetragene pulverförmige Silicium Si1 und/oder Si2 eine solche Teilchengrößenverteilung aufweist, dass 10 Gew.-% der Teilchen einen Durchmesser von weniger als 20 µm aufweisen, 50 Gew.-% der Teilchen einen Durchmesser von weniger als 100 µm aufweisen und 90 Gew.-% der Teilchen einen Durchmesser von weniger als 300 µm aufweisen.

6. Verfahren nach einem der vorhergehenden Ansprüche, bei dem das in den Reaktor eingetragene pulverförmige Silicium Si1 und/oder Si2 eine solche Teilchengrößenverteilung aufweist, dass 10 Gew.-% der Teilchen einen Durchmesser von weniger als 5 µm aufweisen, 50 Gew.-% der Teilchen einen Durchmesser von weniger als 60 µm aufweisen und 90 Gew.-% der Teilchen einen Durchmesser von weniger als 200 µm aufweisen.

7. Verfahren nach einem der vorhergehenden Ansprüche, wobei der Katalysator auf Basis von Kupfer aus der Gruppe bestehend aus metallischem Kupfer, einer Legierung auf Basis von Kupfer oder einer Verbindung auf Basis von Kupfer und Mischungen davon ausgewählt wird.

8. Verfahren nach einem der vorhergehenden Ansprüche, wobei der Katalysator auf Basis von Kupfer aus der Gruppe bestehend aus metallischem Kupfer, einer Kupferlegierung, einem Kupferhalogenid, einem Kupfercarboxylat, einem Kupferoxid und Mischungen davon ausgewählt wird.

9. Verfahren nach einem der vorhergehenden Ansprüche, **dadurch gekennzeichnet, dass** der Katalysator auf Basis von Kupfer in einem Gewichtsanteil von 1 bis 10%, bezogen auf das Gesamtgewicht des eingesetzten Siliciums, verwendet wird.

10. Verfahren nach einem der vorhergehenden Ansprüche, **dadurch gekennzeichnet, dass** es sich bei dem Additiv β1 um metallisches Zink und/oder Zinkchlorid handelt.

11. Verfahren nach einem der vorhergehenden Ansprüche, **dadurch gekennzeichnet, dass** es sich bei dem Additiv β2 um Zinnmetall handelt.

12. Verfahren nach einem der Ansprüche 1 bis 11, **dadurch gekennzeichnet, dass** man die Direktsynthesereaktion bei einer Temperatur im Bereich von 260°C bis 400°C durchführt.

## Claims

1. Process for preparing alkylhalosilanes by reacting an alkyl halide, preferably CH₃Cl, with a solid material, termed contact material, formed of silicon powder and a catalytic system comprising at least one copper-based catalyst and promoter additives β1 and β2 in a fluidized bed reactor, said process being **characterized in that**:
a) a first silicon Si1 is introduced, having an aluminum content of 0.10 to 0.18 weight%, a calcium content of less than 0.2 weight%, and a phosphorus content of less than 50 weight ppm, then
b) a second silicon Si2 is introduced, alone or optionally in a mixture with Si1, having an aluminum content of 0.10 to 0.15 weight%, a calcium content of less than 0.2 weight%, and a phosphorus content of between 50 and 250 weight ppm,
with the proviso that the feeding of Si2 into the reactor may commence when the reaction material has been renewed at least once.

2. Process for preparing alkylhalosilanes according to Claim 1 by reacting an alkyl halide, preferably CH₃Cl, with a solid material, termed contact material, formed of silicon powder and a catalytic system comprising at least one copper-based catalyst and promoter additives β1 and β2 in a fluidized bed reactor, said process being **characterized in that**:
a) a first silicon Si1 is introduced, having an aluminum content of 0.12 to 0.18 weight%, a calcium content of less than 0.2 weight%, and a phosphorus content of less than 50 weight ppm, then
b) a second silicon Si2 is introduced, alone or optionally in a mixture with Si1, having an aluminum content of 0.10 to 0.15 weight%, a calcium content of less than 0.2 weight%, and a phosphorus content of between 50 and 250 weight ppm,
with the proviso that the aluminum content of the silicon Si2 is less than that of the silicon Si1.

3. Process according to Claim 1 or 2, wherein the second silicon Si2, introduced alone or optionally in a mixture with Si1, has an aluminum content of 0.11 to 0.15 weight%, a calcium content of less than 0.2 weight%, and a phosphorus content of between 50 and 200 weight ppm.

4. Process according to any one of the preceding claims, wherein the silicon powder Si1 and/or Si2 introduced into the reactor has a particle size distribution such that 10 weight% of the particles have a diameter of less than 30 µm, 50 weight% of the particles have a diameter of less than 200 µm, and 90 weight% of the particles have a diameter of less than 400 µm.

5. Process according to any one of the preceding claims, wherein the silicon powder Si1 and/or Si2 introduced into the reactor has a particle size distribution such that 10 weight% of the particles have a diameter of less than 20 µm, 50 weight% of the particles have a diameter of less than 100 µm, and 90 weight% of the particles have a diameter of less than 300 µm.

6. Process according to any one of the preceding claims, wherein the silicon powder Si1 and/or Si2 introduced into the reactor has a particle size distribution such that 10 weight% of the particles have a diameter of less than 5 µm, 50 weight% of the particles have a diameter of less than 60 µm, and 90 weight% of the particles have a diameter of less than 200 µm.

7. Process according to any one of the preceding claims, where the copper-based catalyst is selected from the group consisting of the following: metallic copper, a copper-based alloy, or a copper-based compound, and mixtures thereof.

8. Process according to any one of the preceding claims, where the copper-based catalyst is selected from the group consisting of the following: metallic copper, a copper-based alloy, a copper halide, a copper carboxylate, a copper oxide, and mixtures thereof.

9. Process according to any one of the preceding claims, **characterized in that** the copper-based catalyst is used in an amount by weight of 1% to 10% relative to the total weight of silicon employed.

10. Process according to any one of the preceding claims, **characterized in that** the additive β1 is metallic zinc and/or zinc chloride.

11. Process according to any one of the preceding claims, **characterized in that** the additive β2 is tin metal.

12. Process according to any one of Claims 1 to 11, **characterized in that** the direct synthesis reaction is carried out at a temperature lying within the range from 260°C to 400°C.
